# EUROPEAN PATENT APPLICATION

(11) **EP 2 477 452 A1**
(43) Date of publication of application: **18.07.2012**
(21) Application number: 09849092.3
(22) Date of filing: 27.09.2009
(51) Int. Cl.: H04W 88/06

(54) **MEDIATION PLATFORM, CHIP CARD, AND METHOD FOR GENERATING AUTHENTICATION KEY**

(30) Priority: 11.09.2009 CN 200910170346
(71) Applicant: Taisys Technologies Co., Ltd., Taipei 106, Taiwan (CN)
(72) Inventor: HO, Chun-Hsin, Taipei 106, Taiwan (CN)
(74) Representative: Becker Kurig Straus
(86) International application number: PCT/CN2009/001089
(87) International publication number: WO 2011/029216

(57) **Abstract**

A mediate platform and a method for providing an integrated circuit card with an authentication key for a local mobile phone number of a destination is disclosed. The mediate platform includes a processor, an encrypting device, a transmitter, a receiver, a decrypting device, and a calculator, wherein the authentication key is generated by an algorithm, and the local mobile phone number is activated by an authentication center of the destination.

## Description

### FIELD OF THE INVENTION

The present invention relates to a method for generating an authentication key. More particularly, the present invention relates to a method for generating an authentication key by an IC card of a mobile phone.

### BACKGROUND OF THE INVENTION

With the rapid advance in communication technology, there is no doubt about the highly convenience brought by mobile phones. The dependence on mobile phone is increasing so fast that it has become one of the important life necessities for nowadays people. Due to the economic globalization, international business travel is getting more and more common such that international mobile roaming has became an important communication media for business travelers, thereby making the world "borderless".

Although international mobile roaming has provided great convenience, the accompanied high charges are hard to neglect. Therefore, in order to reduce the cost of international mobile roaming, some people even apply for a local mobile number of different countries. Although that may be convenient for those people who needs to stay overseas for a long period, but it may not be practical for travelers who just stay for 3∼5 days. In order to fulfill such needs of the travelers, some international airports provide "pre-paid card" service for the travelers to use at a limited amount of money. However, it might take a lot of time to fill out application forms for the pre-paid cards, and personal information might have a chance to be illegally misused. Furthermore, a pre-paid card needs to be reloaded while the residue amount in the pre-paid card is below balance. However, once the pre-paid card is reloaded, there is a possibility of not being used up which causes a waste. Furthermore, a disadvantage of the pre-paid card is that the SIM card originally in the mobile phone needs to be taken out and replaced with the pre-paid card such that the original SIM card will not be able to receive any phone calls or messages causing a chance to lose important information.

In order to overcome the above mentioned problem, U.S. Patent No. 6,623,305 disclosed a mobile phone with dual SIM card slots. A user can insert two SIM cards in the same mobile phone. However, take the aforementioned pre-paid card for example, although the mobile phone can accommodate both the original SIM card and the pre-paid card such that the user does not need to replace the SIM card with the pre-paid card, only one of the cards can be used to call-out and receive incoming calls at a time, they can not be used at the same time. Moreover, it is not practical to buy a mobile phone with dual SIM card slots merely for a short travel trip.

Due to the aforementioned disadvantages of the prior arts, the present invention thought of providing an IC card which can generate an authentication key, so that it can have a local mobile phone number, thereby won't need to pay high costs for international mobile roaming and can be charged as a local phone number.

### SUMMARY OF THE INVENTION

This paragraph extracts and compiles some features of the present invention; other features will be disclosed in the follow-up paragraphs. It is intended to cover various modifications and similar arrangements included within the spirit and scope of the appended claims.

It is an aspect of the present invention to provide an IC card with an authentication key such that it can have a local mobile phone number to lower the cost of international mobile roaming.

In accordance with the aspect of the present invention, a method for generating an authentication key which is for activating a local mobile phone number includes the following steps: providing an IC card having a first identification number and a second identification number; providing the first identification number to a mediate platform which is stored with the second identification number; encrypting the first identification number; transmitting the encrypted first identification number to a local identification center; generating an identification file corresponding to the first identification number; encrypting a third identification number of the local mobile phone number by the local identification center; sending the identification file and the encrypted third identification number to the mediate platform; obtaining a public key from the local identification center; decrypting the encrypted third identification number by the public key; transmitting the decrypted third identification number and the identification file to the IC card; generating the authentication key by the mediate platform and the IC card by an algorithm using the second identification number and the identification file to perform distributed computing; and activating the local mobile phone number by having the mediate platform output the authentication key to the local identification center.

Preferably, the identification file comprises a distributed factor.

Preferably, the distributed factor comprises date, time, number of times, frequency or cycle.

Preferably, the first identification number and the third identification number comprises Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID).

Preferably, the IC card comprises Subscriber Identity Module (SIM) card, Universal Subscriber Identity Module (USIM) card, User Identity Model (UIM) card or Removable User Identity Module (RUIM) card.

Preferably, the IC card can combine with a Subscriber Identity Module (SIM) card, Universal Subscriber Identity Module (USIM) card, User Identity Model (UIM) card or Removable User Identity Module (RUIM) card.

Preferably, the identification file is a digital signature.

Preferably, the decrypted third identification number and the identification file is transmitted from the mediate platform to the IC card by short message, internet, wireless transmission, smart card reader or OTA (over-the-air).

Preferably, the mediate platform and the local identification center is encrypted by RSA, Diffie-Hellman, ElGamal, Elliptic Curve Cryptography, DSA, Fortezza, DES, Triple DES, AES, RC2, RC4 or IDEA.

In accordance with another aspect of the present invention, a mediate platform for providing an IC card with an authentication key to activate a local mobile phone number includes a processor for obtaining a first identification number of the IC card and obtaining a public key from a local identification center; a memory for storing a second identification number of the IC card; an encryption device for encrypting the first identification number; a transmitter for transmitting the encrypted first identification number to the local identification center; a receiver for receiving an identification file corresponding to the first identification number and generated by the local identification center, and for receiving a third identification number encrypted by the local identification center; a decryption device for decrypting the encrypted third identification number by the public key; and a calculator for generating the authentication key by an algorithm using the second identification number and the identification file to perform distributed computing. The transmitter transmits the decrypted third identification number and the identification file to the IC card such that the IC card can also generate the authentication key by the algorithm, and transmits the authentication key to the local identification center such that the local mobile phone number can be activated.

Preferably, the identification file comprises a distributed factor.

Preferably, the distributed factor comprises date, time, number of times, frequency or cycle.

Preferably, the first identification number and the third identification number comprises Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID).

Preferably, the IC card comprises Subscriber Identity Module (SIM) card, Universal Subscriber Identity Module (USIM) card, User Identity Model (UIM) card or Removable User Identity Module (RUIM) card.

Preferably, the IC card can combine with a Subscriber Identity Module (SIM) card, Universal Subscriber Identity Module (USIM) card, User Identity Model (UIM) card or Removable User Identity Module (RUIM) card.

Preferably, the identification file is a digital signature.

Preferably, the transmitter transmits the decrypted third identification number and the identification file to the IC card by short message, internet, wireless transmission, smart card reader or OTA (over-the-air).

Preferably, the encryption device uses RSA, Diffie-Hellman, ElGamal, Elliptic Curve Cryptography, DSA, Fortezza, DES, Triple DES, AES, RC2, RC4 or IDEA to encrypt.

In accordance with yet another aspect of the present invention, an IC card having an authentication key to activate a local mobile phone number includes a memory for storing a first identification number and a second identification number; a transmitter for transmitting the first identification number to a mediate platform, wherein the first identification number is encrypted by the mediate platform and transmitted to a local identification center; a receiver for receiving an identification file corresponding to the first identification number and generated by the local identification center, and for receiving a third identification number which is encrypted by the local identification center and decrypted by a public key obtained from the local identification center; and a calculator for generating the authentication key by an algorithm using the second identification number and the identification file to perform distributed computing, wherein the authentication key is used by the local identification center to activate the local mobile phone number.

Preferably, the identification file comprises a distributed factor.

Preferably, the distributed factor comprises date, time, number of times, frequency or cycle.

Preferably, the first identification number and the third identification number comprises Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID).

Preferably, the IC card comprises Subscriber Identity Module (SIM) card, Universal Subscriber Identity Module (USIM) card, User Identity Model (UIM) card or Removable User Identity Module (RUIM) card.

Preferably, the IC card can combine with a Subscriber Identity Module (SIM) card, Universal Subscriber Identity Module (USIM) card, User Identity Model (UIM) card or Removable User Identity Module (RUIM) card.

Preferably, the identification file is a digital signature.

Preferably, the receiver receives the third identification number and the identification file from the mediate platform by short message, internet, wireless transmission, smart card reader or OTA (over-the-air).

Preferably, the mediate platform and the local identification center is encrypted by RSA, Diffie-Hellman, ElGamal, Elliptic Curve Cryptography, DSA, Fortezza, DES, Triple DES, AES, RC2, RC4 or IDEA.

### BRIEF DESCRIPTION OF THE DRAWINGS

Fig. 1 is a block diagram of an IC card and a mediate platform according to a preferred embodiment of the present invention; and

Figs. 2A and 2B are flow charts of a method for generating authentication key according to a preferred embodiment of the present invention.

### DETAILED DESCRIPTION OF THE PREFERRED EMBODIMENT

The present invention will now be described more specifically with reference to the following embodiments. It is to be noted that the following descriptions of preferred embodiment of this invention is presented herein for purpose of illumination and description only; it is not intended to be exhaustive or to be limited to the precise form disclosed.

The present invention provides a method for an IC card to generate an authentication key by itself without external inputting (ex., internet download, wireless transmission, system installation). If a user can obtain a local mobile phone number of a destination country, then they won't need to pay high costs for international mobile roaming and can be charged as a local phone number. Details will be further described in the following paragraphs. Although the present embodiment will use GSM communication system as an example, a person skilled in the art should understand that it is not limited to so, other communication systems can also be used in the present invention, for example, GPRS, 3G, CDMA, WCDMA and so on.

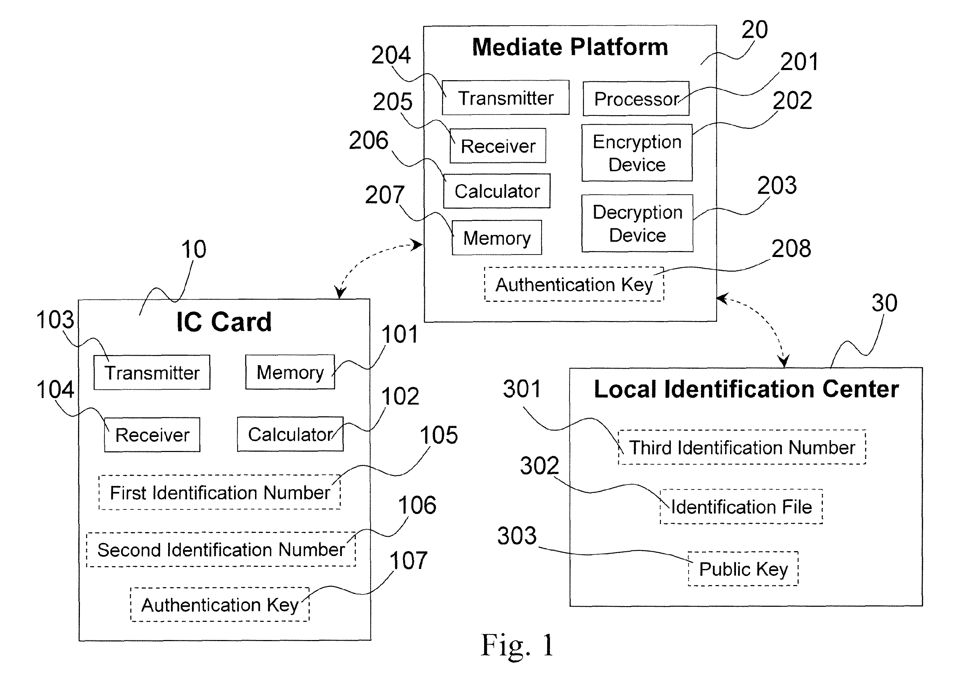

First, please refer to Fig. 1, it shows main elements (solid line frame) of an IC card 10 and a mediate platform 20 of the present invention and information/elements (dash line frame) included therein. As shown, the IC card 10 includes a memory 101, calculator 102, transmitter 103 and receiver 104. The mediate platform 20 includes a processor 201, encryption device 202, decryption device 203, transmitter 204, receiver 205, calculator 206 and memory 207.

In Fig. 1, it not only illustrates an IC card 10 and a mediate platform 20 of the present invention, but also illustrates a local identification center 30 which is a local identification unit (card issuer) of a destination country that the user wants to enter. The local identification center 30 provides mobile phone number and communication service. Different countries have different local identification centers, and therefore, the mediate platform 20 is a platform that integrates local identification centers of all countries such that the user doesn't need to spend time and energy to apply for a local mobile phone number from each country. By the mediate platform 20, the user can simply obtain a local mobile phone number from the destination country before even entering such that the user doesn't need to spend time finding a local identification center in an unfamiliar country. Due to the fact that an authentication key (Ki) of a mobile phone can not be loaded into an IC card by short message, internet download, wireless transmission, smart card reader or OTA (over-the-air), a new mobile phone number can not be added to a current IC card. Therefore, to overcome such limitation the present invention thought of to have the IC card 10 and the mediate platform 20 separately generate the same authentication key by themselves, and then have the mediate platform 20 transmit the generated authentication key 208 to the local identification center 30 by an output file.

Take GSM communication system as example, the IC card 10 can be not only a Subscriber Identity Module (SIM) card, but also a smart card that has a subscriber identity module (SIM), or even an IC card which does not have a subscriber identity module (SIM) but can combine with a SIM card. As mentioned above, the present invention is not limited to GSM communication system, and therefore, the IC card 10 can also be a Universal Subscriber Identity Module (USIM) card, User Identity Model (UIM) card or Removable User Identity Module (RUIM) card. The IC card 10 can also combine with a Subscriber Identity Module (SIM) card, Universal Subscriber Identity Module (USIM) card, User Identity Model (UIM) card or Removable User Identity Module (RUIM) card. Due to the fact that the IC card 10 is not limited to GSM communication system, it is also not limited to have a subscriber identity module (SIM), it can instead be combine with a SIM card, and therefore, the IC card 10 can be for a different communication system if the user is entering a country that is not using the GSM communication system.

The memory 101 is for storing a first identification number 105 and a second identification number 106 of the IC card 10. The first identification number 105 includes information such as Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID). The second identification number 106 is an individual identification serial number of the IC card 10 which is formed during manufacturing and is not able to be transmitted to or accessed by an external terminal through short message, internet download, wireless transmission, smart card reader or OTA (over-the-air), and therefore, only the IC card 10 itself has the individual identification serial number, and only the mediate platform 20 that manufactures the IC card 10 knows the individual identification serial number. The mediate platform 20 stores the individual identification serial number (i.e., second identification number 106) in the memory 207.

The transmitter 103 is used for transmitting the first identification number 105 to the mediate platform 20. The receiver 104 is used for receiving from the mediate platform 20 an identification file 302 (can be a digital signature) corresponding to the first identification number 105 and generated by the local identification center 30, and for receiving from the mediate platform 20 a third identification number 301 which is decrypted by a public key 303 obtained from the local identification center 30. The same as the first identification number 105, the third identification number 301 includes information such as Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID). The receiver 104 receives the third identification number 301 and the identification file 302 from the transmitter 204 of the mediate platform 20 by short message, internet, wireless transmission, smart card reader or OTA (over-the-air). The calculator 102 generates the authentication key 107 by an algorithm using the second identification number 106 and the identification file 302 to perform distributed computing.

Since the mediate platform 20 also has the second identification number 106, the calculator 206 of the mediate platform 20 can generate an authentication key 208 by the algorithm (the same as the algorithm in the calculator 102) using the second identification number 106 and the identification file 302 to perform distributed computing.

The processor 201 obtains the first identification number 105 of the IC card 10, and obtains the public key 303 from the local identification center 30. The encryption device 202 mainly uses RSA, Diffie-Hellman, ElGamal, Elliptic Curve Cryptography, DSA, Fortezza, DES, Triple DES, AES, RC2, RC4 or IDEA to encrypt the first identification number 105. In the present embodiment, the encryption device 202 uses symmetric encryption such as DES to perform encryption.

The transmitter 204 is for transmitting the encrypted first identification number 105 to the local identification center 30, and for transmitting the decrypted third identification number 301 and the identification file 302 to the IC card 10 such that the IC card 10 can also generate the authentication key 107 by the algorithm. Moreover, the transmitter 204 is also in charge of transmitting the authentication key 208 to the local identification center 30 such that the local mobile phone number can be activated. Since the authentication key 107 and the authentication key 208 are generated by the calculator 102 and the calculator 206 with the same algorithm, the local identification center 30 just needs to use the authentication key 208 to activate the local mobile phone number.

The receiver 205 receives the identification file 302 and the third identification number 301 encrypted by the local identification center 30. The same as the encryption device 202, the local identification center 30 can also encrypt the third identification number 301 by RSA, Diffie-Hellman, ElGamal, Elliptic Curve Cryptography, DSA, Fortezza, DES, Triple DES, AES, RC2, RC4 or IDEA. In the present embodiment, the local identification center 30 performs encryption by asymmetric encryption such as RSA. The decryption device 203 then uses the public key 303 to decrypt the encrypted third identification number 301. The calculator 206 generates the authentication key 208 by an algorithm using the decrypted third identification number 301 and the identification file 302.

After simply introducing each of the elements of the IC card 10 and the mediate platform 20, a detail description on how to generate an authentication key, and relationships between the IC card 10, mediate platform 20 and local identification center 30 will be later on presented.

As aforementioned, the main object of the present invention is to provide a user with a local mobile phone number of another country such that they won't need to pay high costs for international mobile roaming and can be charged as a local phone number while being overseas.

Usually, the local identification center 30 uses IMSI code, ICCID code and KI code for authentication of a SIM card. IMSI code and ICCID code can be loaded to an IC card through short message, internet, wireless transmission, smart card reader or OTA (over-the-air), and only the KI code can not be transmitted by such method. Therefore, the present invention uses the following method to overcome such problem.

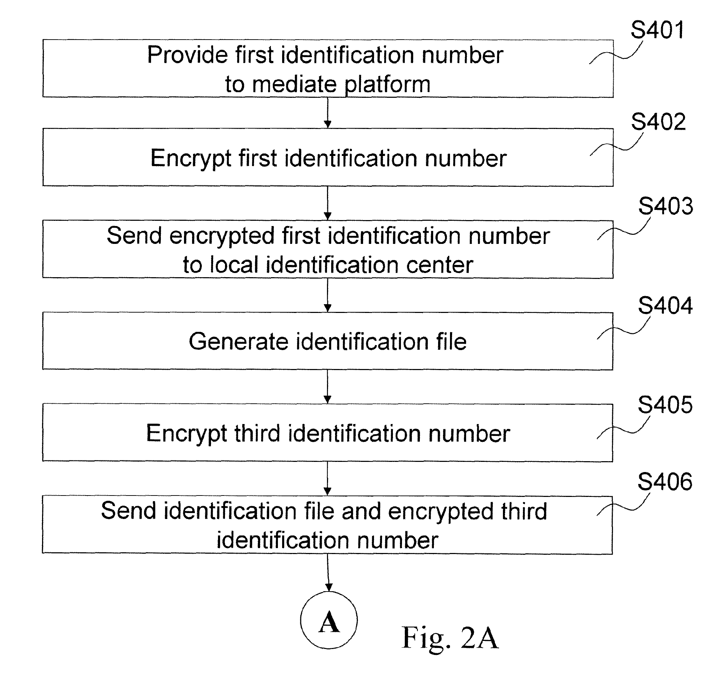

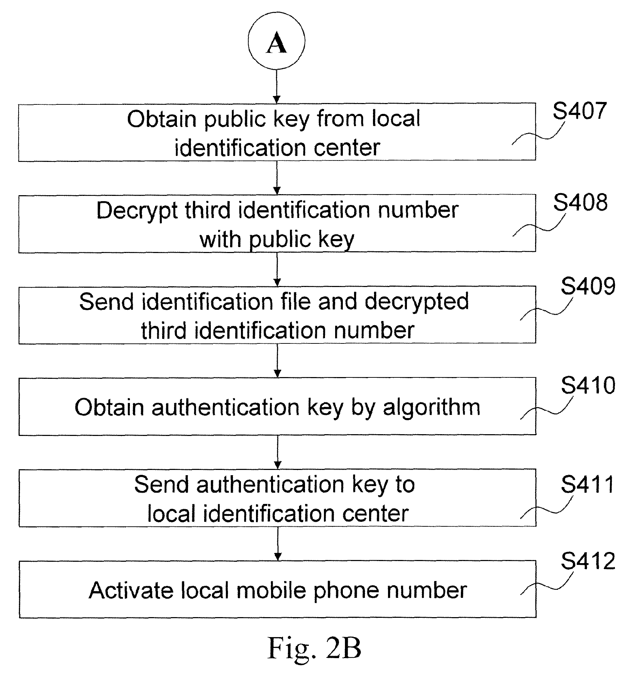

Please refer to Figs. 2A and 2B, it illustrates a flow chart of a method for generating authentication key (KI) according to the present invention. First, a first identification number 105 is transmitted from a transmitter 103 of an IC card 10 to a receiver 205 of a mediate platform 20 (step S401). Then, an encryption device 202 uses RSA, Diffie-Hellman, ElGamal, Elliptic Curve Cryptography, DSA, Fortezza, DES, Triple DES, AES, RC2, RC4 or IDEA to encrypt the first identification number105 after the receiver 205 receives the first identification number105 (step S402). In this embodiment, the encryption device 202 uses symmetric encryption such as DES to perform encryption. After the encryption, the transmitter 204 will send the encrypted first identification number 105 along with its encrypting key to a local identification center 30 (step S403). Because the first identification number 105 is encrypted by a symmetric encryption, the local identification center 30 just needs to use the encrypting key provided by the transmitter 204 to perform decryption. The local identification center 30 then obtains the identity information of the user and data of the IC card 10 based on the first identification number 105. After archiving, the local identification center 30 then uses a private key to encrypt the first identification number 105 into an identification file 302 by RSA asymmetric encryption such that the local identification center 30 can use it as a basis for future authentication and identification (step S404). In other words, the identification file 302 is a digital signature of the local identification center 30. When the user enters the country which the local identification center 30 is located and requests to apply for a local mobile phone number, the local identification center 30 will distribute a new local mobile phone number to the user, and use the private key to encrypt a third identification number 301 of such new local mobile phone number by RSA (step S405). Later, the encrypted third identification number 301 and the identification file 302 will be sent to the receiver 205 of the mediate platform 20 by short message, internet, wireless transmission, smart card reader or OTA (over-the-air)(step S406). Then, the processor 201 requests the local identification center 30 to provide the public key 303 for decryption (step S407). The decryption device 203 the uses the obtained public key 303 to decrypt the third identification number 301 (step S408). The identification file 302 and the decrypted third identification number 301 will be transmitted to the receiver 104 of the IC card 10 by the transmitter 204 through short message, internet, wireless transmission, smart card reader or OTA (over-the-air)(step S409). The calculator 102 and the calculator 206 can then use the identification file 302 and the second identification number 106 to, respectively, generate an authentication key 107 and an authentication key 208 by an algorithm (step S410). The calculated authentication key 107 and the authentication key 208 will be the same since the parameters (identification file 302 and the second identification number 106) used by the calculator 102 and the calculator 206 for the algorithm are the same. After the calculator 206 generates the authentication key 208, the transmitter 204 will send the authentication key 208 to the local identification center 30 (step S411), and the local identification center 30 will activate the local mobile phone number by the authentication key 208 (step S412). Furthermore, since the local identification center 30 already obtained the identify information of the user and the data of the IC card 10 from the first identification number 105, and the user of the IC card 10 and the user of the mobile phone number which has the authentication key 208 and the third identification number 301 are the same, the local mobile phone number can be activated directly without needing to go through complicated application procedures while the user enters the country.

Furthermore, users usually just stay for travel or business in a foreign country for a short period, so the need of a local mobile phone number is not permanent, and therefore, in order to efficiently manage the mobile phone number, the local identification center 30 can add one or more distributed factors in the identification file 302, for example, the distributed factor may include parameters such as date, time, number of times, frequency and cycle. If the identification file 302 has a distributed factor, then the authentication key 107 and the authentication key 208 needs to be obtained by distributed computing through both the algorithm and the distributed factor. In other words, if the default of the distributed factor is a period of time, then the generated authentication key 107 and the authentication key 208 will just be available in such a period of time. In the present embodiment, the period of time can be based on the period the user is planning to stay. In other words, the local mobile phone number will be consequently invalid while the user leaves the country.

When a user needs to enter more than one country, he/she can in advance obtain the third identification number 301 and the identification file 302 of each destination countries and store them in the memory 101 until one of the local mobile phone numbers are needed to be activated. Then, the calculator 102 and the calculator 206 will directly generate an authentication key 107 and an authentication key 208 for the destination country by the algorithm, and then the authentication key 208 will be sent to the local identification center 30 of the destination country by the transmitter 204 so that the local mobile phone number can be activated. By this way, the memory 101 dose not need to store the authentication keys 107 for each destination country. Only the identification file 302 for each destination country is needed to be stored. The third identification number 301 also does not need to be stored in advance; it can be loaded later on via short message, internet, wireless transmission, smart card reader or OTA (over-the-air) while needed.

In conclusion, the present invention provides a method for an IC card and a mediate platform to generate separately the same authentication key by themselves, and have the mediate platform transmit the generated authentication key to the local identification center so that the IC card can generate the authentication key by itself without external inputting (ex., internet download, wireless transmission, system installation). By this way, a user can obtain a local mobile phone number of a destination country, then they won't need to pay high costs for international mobile roaming and can be charged as a local phone number.

While the invention has been described in terms of what is presently considered to be the most practical and preferred embodiment, it is to be understood that the invention needs not be limited to the disclosed embodiment. On the contrary, it is intended to cover various modifications and similar arrangements included within the spirit and scope of the appended claims, which are to be accorded with the broadest interpretation so as to encompass all such modifications and similar structures.

## Claims

1. A method for generating an authentication key which is for activating a local mobile phone number, comprising the following steps:
providing an IC card having a first identification number and a second identification number;
providing the first identification number to a mediate platform which is stored with the second identification number;
encrypting the first identification number;
transmitting the encrypted first identification number to a local identification center;
generating an identification file corresponding to the first identification number;
encrypting a third identification number of the local mobile phone number by the local identification center;
sending the identification file and the encrypted third identification number to the mediate platform;
obtaining a public key from the local identification center;
decrypting the encrypted third identification number by the public key;
transmitting the decrypted third identification number and the identification file to the IC card;
generating the authentication key by the mediate platform and the IC card by an algorithm using the second identification number and the identification file to perform distributed computing; and
activating the local mobile phone number by having the mediate platform output the authentication key to the local identification center.

2. The method according to claim 1, wherein the identification file comprises a distributed factor.

3. The method according to claim 2, wherein the distributed factor comprises date, time, number of times, frequency or cycle.

4. The method according to claim 1, wherein the first identification number and the third identification number comprises Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID).

5. The method according to claim 1, wherein the IC card comprises Subscriber Identity Module (SIM) card, Universal Subscriber Identity Module (USIM) card, User Identity Model (UIM) card or Removable User Identity Module (RUIM) card.

6. The method according to claim 1, wherein the IC card can combine with a Subscriber Identity Module (SIM) card, Universal Subscriber Identity Module (USIM) card, User Identity Model (UIM) card or Removable User Identity Module (RUIM) card.

7. The method according to claim 1, wherein the identification file is a digital signature.

8. The method according to claim 1, wherein the decrypted third identification number and the identification file is transmitted from the mediate platform to the IC card by short message, internet, wireless transmission, smart card reader or OTA (over-the-air).

9. The method according to claim 1, wherein the mediate platform and the local identification center is encrypted by RSA, Diffie-Hellman, ElGamal, Elliptic Curve Cryptography, DSA, Fortezza, DES, Triple DES, AES, RC2, RC4 or IDEA.

10. A mediate platform for providing an IC card with an authentication key to activate a local mobile phone number, comprising:
a processor for obtaining a first identification number of the IC card and obtaining a public key from a local identification center;
a memory for storing a second identification number of the IC card;
an encryption device for encrypting the first identification number;
a transmitter for transmitting the encrypted first identification number to the local identification center;
a receiver for receiving an identification file corresponding to the first identification number and generated by the local identification center, and for receiving a third identification number encrypted by the local identification center;
a decryption device for decrypting the encrypted third identification number by the public key; and
a calculator for generating the authentication key by an algorithm using the second identification number and the identification file to perform distributed computing;
wherein the transmitter transmits the decrypted third identification number and the identification file to the IC card such that the IC card can also generate the authentication key by the algorithm, and transmits the authentication key to the local identification center such that the local mobile phone number can be activated.

11. The mediate platform according to claim 10, wherein the identification file comprises a distributed factor.

12. The mediate platform according to claim 11, wherein the distributed factor comprises date, time, number of times, frequency or cycle.

13. The mediate platform according to claim 10, wherein the first identification number and the third identification number comprises Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID).

14. The mediate platform according to claim 10, wherein the IC card comprises Subscriber Identity Module (SIM) card, Universal Subscriber Identity Module (USIM) card, User Identity Model (UIM) card or Removable User Identity Module (RUIM) card.

15. The mediate platform according to claim 10, wherein the IC card can combine with a Subscriber Identity Module (SIM) card, Universal Subscriber Identity Module (USIM) card, User Identity Model (UIM) card or Removable User Identity Module (RUIM) card.

16. The mediate platform according to claim 10, wherein the identification file is a digital signature.

17. The mediate platform according to claim 10, wherein the transmitter transmits the decrypted third identification number and the identification file to the IC card by short message, internet, wireless transmission, smart card reader or OTA (over-the-air).

18. The mediate platform according to claim 10, wherein the encryption device uses RSA, Diffie-Hellman, ElGamal, Elliptic Curve Cryptography, DSA, Fortezza, DES, Triple DES, AES, RC2, RC4 or IDEA to encrypt.

19. An IC card having an authentication key to activate a local mobile phone number, comprises:
a memory for storing a first identification number and a second identification number;
a transmitter for transmitting the first identification number to a mediate platform, wherein the first identification number is encrypted by the mediate platform and transmitted to a local identification center;
a receiver for receiving an identification file corresponding to the first identification number and generated by the local identification center, and for receiving a third identification number which is encrypted by the local identification center and decrypted by a public key obtained from the local identification center; and
a calculator for generating the authentication key by an algorithm using the second identification number and the identification file to perform distributed computing, wherein the authentication key is used by the local identification center to activate the local mobile phone number.

20. The IC card according to claim 19, wherein the identification file comprises a distributed factor.

21. The IC card according to claim 20, wherein the distributed factor comprises date, time, number of times, frequency or cycle.

22. The IC card according to claim 19, wherein the first identification number and the third identification number comprises Temporary Mobile Subscriber Identity (TMSI), International Mobile Subscriber Identity (IMSI), International Mobile Equipment Identity (IMEI), User Identity Module Identifier (UIMID), Electronic Serial Number (ESN) or Integrate Circuit Card Identity (ICCID).

23. The IC card according to claim 19, wherein the IC card comprises Subscriber Identity Module (SIM) card, Universal Subscriber Identity Module (USIM) card, User Identity Model (UIM) card or Removable User Identity Module (RUIM) card.

24. The IC card according to claim 19, wherein the IC card can combine with a Subscriber Identity Module (SIM) card, Universal Subscriber Identity Module (USIM) card, User Identity Model (UIM) card or Removable User Identity Module (RUIM) card.

25. The IC card according to claim 19, wherein the identification file is a digital signature.

26. The IC card according to claim 19, wherein the receiver receives the third identification number and the identification file from the mediate platform by short message, internet, wireless transmission, smart card reader or OTA (over-the-air).

27. The IC card according to claim 19, wherein the mediate platform and the local identification center is encrypted by RSA, Diffie-Hellman, ElGamal, Elliptic Curve Cryptography, DSA, Fortezza, DES, Triple DES, AES, RC2, RC4 or IDEA.
